# EUROPEAN PATENT SPECIFICATION

(11) **EP 1 994 699 B1**
(45) Date of publication and mention of the grant of the patent: **10.04.2019**
(21) Application number: 07716018.2
(22) Date of filing: 27.02.2007
(51) Int. Cl.: H04L 12/66, H04M 11/04, H04L 29/08, H04L 12/28, H04W 64/00, H04W 76/00, H04M 11/06, H04W 4/90, H04W 76/50, H04W 4/02, H04W 8/08

(54) **A METHOD AND APPARATUS FOR LOCATION DETERMINATION IN FIXED COMMUNICATION ACCESS NETWORKS**
VERFAHREN UND VORRICHTUNG ZUR POSITIONSBESTIMMUNG IN FIXIERTEN KOMMUNIKATIONSZUGANGSNETZWERKEN
PROCEDE ET APPAREIL POUR LA DETERMINATION DE LOCALISATION DANS DES RESEAUX D'ACCES DE COMMUNICATION FIXES

(30) Priority: 16.03.2006 US 376885
(43) Date of publication of application: 26.11.2008
(73) Proprietor: Telefonaktiebolaget LM Ericsson (publ), 164 83 Stockholm (SE)
(72) Inventor: BOLIN, Johan, S-16355 Spanga (SE)
(74) Representative: Brann AB
(86) International application number: PCT/SE2007/000178
(87) International publication number: WO 2007/106011

(56) References cited:
- JP-A- 2003 198 757
- JP-A- 2004 364 017
- US-A- 5 867 780
- US-A1- 2005 063 519
- US-A1- 2005 169 248
- US-A1- 2005 169 248
- US-A1- 2005 265 326
- US-B1- 6 665 611

## Description

### TECHNICAL FIELD

The present invention relates generally to a method and apparatus for determining the location of a calling party in a fixed IP access network. In particular, the invention can be used for providing location information on the calling party when required in connection with a call, e.g. an emergency call.

### BACKGROUND

An ongoing trend in telecommunication today is that fixed access networks are evolving from circuit-switched networks to packet-switched networks allowing for broadband access based on IP (Internet Protocol), to meet the increasing demands for multimedia communication. Multimedia services typically entail IP based transmission of encoded data representing media in different formats and combinations, including audio, video, images, text, documents, animations, etc.

Traditional telephones are thus replaced by IP terminals capable of packet-based multimedia communication, including fixed or mobile telephones and computers. Such terminals include VoIP (Voice-over-IP) clients and applications for IP-based messaging, among other things. However, with the change of technology some of the existing features and services must be solved in new ways, including the ability to determine the location of calling subscribers. One important area where location information is typically in demand is emergency calls, but there are also other services using location information such as presence services, messaging and various information services including GIS (Geographic Information System).

In traditional circuit-switched telephony systems, emergency services are available for subscribers in situations of emergency, such as accidents and diseases. Emergency calls are typically first routed to an emergency centre which then can connect the calls further to relevant emergency service stations, depending on the current situation, e.g. a hospital, a fire station or the police.

Details and requirements of emergency services are subject to regulations prevailing in different countries and regions. Typically, it is required that the telephony system can provide relevant location information in order to certify the location of the calling party. Firstly, it may be important to connect an incoming call to a suitable emergency centre or service station being reasonably close to the caller. Secondly, the caller may not for some reason be able to provide information regarding his/her whereabouts to the emergency centre or service station, at least not immediately, which naturally may be crucial for taking further actions.

US 2005/169248 A1 describes a method and apparatus for providing in-band location information in an emergency response network. JP2004 364017 A describes method and apparatus to reliably and appropriately provide an IP telephone in an emergency. US 6665611 B1 describes a system for discovering and maintaining geographic location information for computer network.

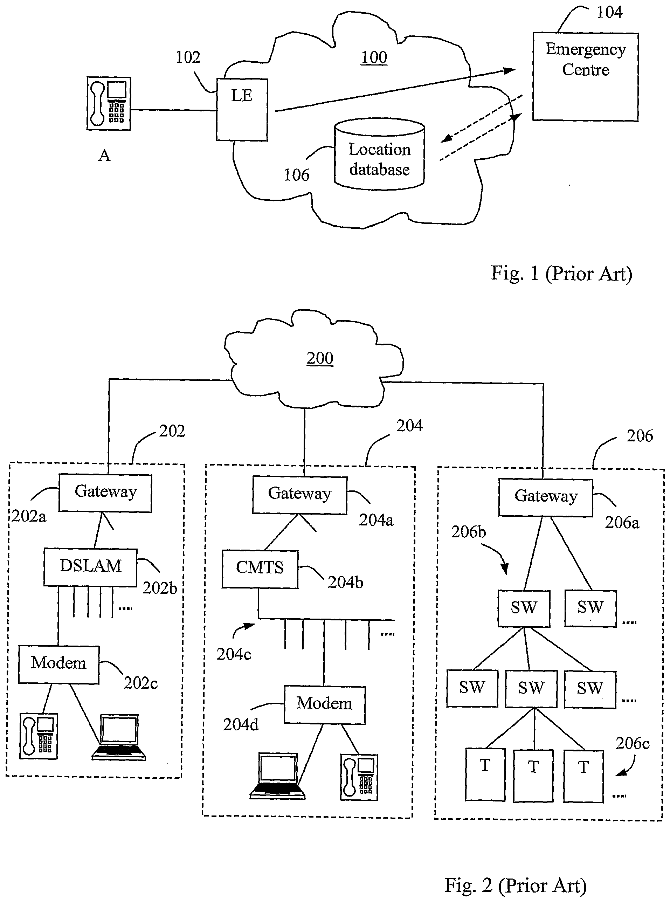

Fig. 1 illustrates a fixed subscriber terminal A connected to a traditional telephony network 100 by means of a local exchange LE 102. An emergency centre 104 is also connected to the network 100, to which an emergency call is routed from subscriber A Network 100 further comprises a location database 106 holding geographic location information on subscribers fixedly connected to the network 100, including subscriber A, e.g. in the form of local street addresses or the like.

It is typically required in fixed public networks that local exchanges therein ensures that a "calling party identifier" is included in emergency calls when routed to an emergency centre. In the present example, local exchange 102 has knowledge of subscriber terminal A being connected to a specific input line in the exchange, which is associated with a specific calling party identifier of subscriber terminal A. The local exchange 102 is thus required to supply the calling party identifier of subscriber terminal A when transmitting the emergency call to emergency centre 104. In location database 106, the geographic location of subscriber terminal A has been stored together with its calling party identifier, such that the emergency centre 104 can retrieve that location information from the location database 106 by means of the calling party identifier received with the emergency call.

In a cellular network, a serving Mobile Switching Centre MSC can include location information in emergency calls from mobile terminals, such as a cell identification or even more accurate information in the form of geographic coordinates or the like based on positioning functions employed in the network. Further, the receiving emergency centre may also use specific location services to determine the location of the calling party, if necessary.

IP based networks are configured to give communication access to subscribers at different locations. In the following description, the term "end point" will be used to represent a broadband network connection where users can plug in their communication equipment, i.e. IP terminal(s) such as a PC or VoIP telephone, e.g. using a modem as an IP interface. For example, an end point may be a telephony connection, a TV cable connection or an Ethernet connection, as will be described in more detail below.

Typically, it is assumed that the terminal is located relatively close to the end point, although this is not always the case. For example, if a private LAN (Local Area Network) is connected to an end point of a public access network, a number of new end points within the LAN are effectively introduced. Thus, the geographic location of specific end points within the LAN are typically unknown to the public network, unless they are specifically reported to the public network for storage in a location database or the like.

Moreover, a fixed portable terminal can be jacked into different access points at different locations in an IP access network, e.g. for accessing various "broadband" services. As a result, since an IP terminal thus can access fixed IP networks more or less regardless of its current geographic location while still using the same subscriber identity, the location of a calling subscriber terminal is not always permanent and known in the same way as before.

Fig. 2 illustrates schematically three basic types of wire line access networks that are used today for IP-based broadband access, which are shown connected to a backbone network 200 such as the Internet. A first network type 202 is connected to a backbone network 200 by means of a gateway 202a and is based on DSL (Digital Subscriber Line) technology. A switching node 202b referred to as DSLAM (DSL Access Multiplexor) is connected to a plurality of individual dedicated subscriber lines, where each subscriber uses a DSL type modem (modulator/demodulator) 202c (e.g. ADSL) for modulating signals from one or more connected IP terminals onto a conventional dual line copper wire, i.e. telephone wire. The DSLAM node 202b converts modulated signals received on each subscriber line into Ethernet language, and vice versa.

A second network type 204 is likewise connected to a backbone network 200 by means of a gateway 204a and is based on cable television technology using coaxial or HFC (Hybrid Fiber Coax) antenna cables. A switching node 204b referred to as CMTS (Cable Modem Termination system) connects a common TV cable 204c, to which a plurality of cable modems 204d are connected for modulating signals from connected IP terminals onto the TV cable. The CMTS node 204b converts modulated signals received on the common TV cable 204c into Ethernet, and vice versa. The location of the specific endpoints is typically unknown, unless such information is added at the endpoints.

Finally, a third network type 206 is also connected to a backbone network 200 by means of a gateway 206a and is based on Ethernet communication technology throughout. A plurality of switching nodes 206b are interconnected in a trellis-like structure, here shown as having different hierarchic levels although other structures may also occur. Further, a plurality of IP terminals 206c are connected to at least some of the switches 206b, in this case the lowest level switches in the hierarchy. It should be noted that Ethernet based LAN is now being introduced on a large scale for broadband access, especially in new residential buildings and offices, e.g. using optical transport to provide high bandwidth.

In this description, the above network types will be briefly referred to as "DSL network", "Cable network" and "Ethernet network", respectively. However, these access technologies typically share the problem of obtaining reliable geographic location information for calling subscribers using ambulant terminals, and there are no built-in functions to this end as yet.

Firstly, it is necessary to be able to separate the traffic of different subscribers from each other. If the access network is configured in a "star" topology, (i.e. each endpoint has a separate cable connected to a central router or switch), each dedicated connection can be associated with a location. However, if a "bus" topology is used (i.e. plural endpoints share the same cable by means of multiplexing), the information flow on the shared cable must be analysed, in order to separate the information flow from each endpoint from the others and detect which endpoint the call comes from. Typically, DSL networks use the star topology, whereas cable networks use the bus topology, which is also illustrated in Fig. 2, although in practice, the star and bus structures may also be built as clusters in any mixed combinations. For example, small stars may be connected to larger stars, and small bus networks may be connected to larger bus or star networks, and vice versa.

Secondly, even if one end point can be distinguished from other ones, each known end point must somehow be associated with location information such as a street address or geographical coordinates or the like, requiring that a location database is properly maintained for the known end points. Typically, the subscriber himself/herself must provide mapping information for a network address currently used, e.g. a layer 2 IP address, and a corresponding location, e.g. street address, for storage in the location database. It is therefore impossible to validate that the stored mapping information is correct for each call, particularly when subscribers move between different end points. Thus, such a location database is troublesome to maintain and still not wholly reliable.

Hence, the problem of determining the location of a calling subscriber correctly according to known methods is basically two-fold, namely detecting from which end point the call is made and determining the location of that end point. In addition, the obtained location information must sometimes also be used for routing the call to the proper party, particularly in the case of emergency calls. This must also be done quite fast, preferably within a few seconds, often being subject to regulations.

In regard to the background description above, it is desirable to obtain location information on a calling subscriber connected to a fixed IP telephony network according to any of the three above-described network types, in a simple yet reliable way. It is also desirable to eliminate the need for specific network-adapted solutions, and to obtain reliable location information independent of routines, configurations and the architecture in the access network. It is particularly desirable to obtain reliable location information for emergency calls in a reasonably swift manner, e.g. in order to satisfy prevailing emergency requirements. It is also desirable to enable the swift selection of a suitable emergency centre to which an emergency call is to be routed, depending on the location of the calling subscriber.

### SUMMARY

The object of the present invention is to address the problems outlined above, and to provide a solution for obtaining reliable location information for a subscriber terminal connected to an IP access network, e.g. for supply to an emergency centre in connection with an emergency call. This object and others may be obtained by providing an apparatus, a system and methods according to the attached independent method claim 1, apparatus claim 6, method claim 9 and system claim 14.

According to one aspect, the present invention provides a method of providing a location of a subscriber terminal connected to a fixed IP access network at an end point, as executed in a Location Information Component LIC placed basically in the vicinity of said terminal and said end point in order to represent the position of said terminal. First, broadcast signals are received from one or more base stations in a mobile network. Then, latest position-related information is derived from the broadcast signals received from the one or more base stations in the mobile network. Then, the steps of receiving and the deriving are repeated to periodically update the latest position-related information. A data stream, sent by the terminal from said end point, is then received. The latest derived position-related information is then added to the data stream, and the thus modified data stream is sent over the IP access network.

The latest position-related information may be added to the data stream by attaching a separate bit section containing the latest position-related information, or by modulating the latest position-related information upon at least a part of the data stream.

If broadcast signals are received from base stations in a mobile network, the latest position-related information can be derived by measuring the received signals with respect to a received signal strength and/or time alignment, and/or by reading cell information contained in the signals such as a cell identity or location area identity.

According to another aspect, the present invention provides an arrangement for providing the location of a subscriber terminal connected to a fixed IP access network at an end point, in a Location Information Component LIC placed basically in the vicinity of said terminal and said end point in order to represent the position of said terminal. The inventive LIC arrangement comprises means for receiving broadcast signals from one or more base stations in a mobile network, means for deriving latest position-related information from the broadcast signals received from the one or more base stations in a mobile network, means for repeating the receiving and the deriving to periodically update the latest position-related information. The LIC arrangement further comprises means for receiving a data stream sent by said terminal from said end point, means for adding the latest derived position-related information to the data stream, and means for sending the thus modified data stream over the IP access network.

The adding means may be adapted to add the latest position-related information to the data stream by attaching a separate bit section containing the latest position-related information, or by modulating the latest position-related information upon at least a part of the data stream.

The deriving means may be adapted to derive the latest position-related information from broadcast signals received from one or more base stations in a mobile network, by measuring the received signals with respect to a received signal strength and/or time alignment, and/or by reading cell information contained in the signals such as a cell identity or location area identity.

According to yet another aspect, the present invention provides a method of providing location information for a subscriber terminal connected to a fixed IP access network at an end point, as executed in a Location Information Aggregator LIA arranged centrally to receive data streams from end points in the IP access network. A data stream modified to contain latest position-related information is received, and the latest position-related information is extracted from the data stream, wherein the latest position-related information is updated periodically. Then, location information, based on the extracted latest position-related information, is associated with a network address of the end point, or with an identity of the sending terminal or of a modem, if used.

A geographic position may be retrieved from a mobile positioning system based on the extracted latest position-related information, to constitute explicit location information in said association. Alternatively, the extracted latest position-related information may constitute implicit location information in said association. The latest position-related information may be extracted by taking an attached separate bit section containing the latest position-related information from the data stream, or by de-modulating at least a part of the data stream.

According to yet another aspect, the present invention provides an arrangement for providing location information for a subscriber terminal connected to a fixed IP access network at an end point, in a Location Information Aggregator LIA arranged centrally to receive data streams from end points in the IP access network. The inventive LIA arrangement comprises means for receiving a data stream modified to contain latest position-related information, means for extracting the latest position-related information from the data stream, and means for associating location information, based on the extracted latest position-related information, with a network address of the end point, or with an identity of the sending terminal or of a modem, if used, wherein the latest position-related information is updated periodically.

The LIA arrangement may further comprise means for retrieving a geographic position from a mobile positioning system based on the extracted latest position-related information, to constitute explicit location information in the associating means. The extracted latest position-related
information may otherwise constitute implicit location information in the associating means.

The extracting means may be adapted to extract the latest position-related information by taking an attached separate bit section containing the latest position-related information from the data stream, or by de-modulating at least a part of the data stream.

### BRIEF DESCRIPTION OF THE DRAWINGS

The present invention will now be described in more detail and with reference to the accompanying drawings, in which:
- Fig. 1 is a schematic block diagram of a communication network providing location information for an emergency 15 call, according to the prior art.
- Fig. 2 is a schematic block diagram depicting three different network types for fixed broadband access, in which the present invention can be used.
- Fig. 3a is a block diagram illustrating an arrangement for 20 obtaining location information in a star type network, according to one embodiment.
- Fig. 3b is a block diagram illustrating an arrangement for obtaining location information in a bus type network, according to another embodiment.
- Fig. 4 is a block diagram illustrating a more detailed arrangement and a procedure for obtaining location information, according to further embodiments.
- Fig. 5 is a flow chart illustrating a procedure executed by a Location Information Component for obtaining location 30 information, according to another embodiment.
- Fig. 6 is a flow chart illustrating a procedure executed by a Location Information Aggregator for obtaining location information, according to yet another embodiment.

### DETAILED DESCRIPTION

The present invention provides a solution for obtaining the position of a calling subscriber terminal connected to an IP access network, to support communication services requiring or needing such information, such as emergency services in particular. The fact that the different end points as well as other network nodes in the IP access network are in most cases physically situated at locations being under radio coverage of a mobile (or cellular) network, can be utilised in the following manner. Alternatively, a satellite based navigation system such as GPS (Global Positioning System) or Gallileo can be utilised.

Briefly described, if a mobile network is utilised, broadcasted signals from one or more base stations in the mobile network are received by a radio receiver at a position reasonably close to a calling terminal, and position-related information is derived from the received broadcast signals. The position-related information can be used for determining the position of the radio receiver, and thereby also the position of the calling terminal. The position-related information may be derived by measuring received signals with respect to one or more physical parameters, and/or by reading cell information contained in the signals. Alternatively, the radio receiver may be a GPS receiver directly receiving position-related information from satellites in a GPS network.

The derived position-related information, i.e. measurement results and/or read cell information from a mobile network, or satellite navigation information (e.g. GPS), is then added to a data stream coming from the calling terminal, which is further conveyed through the IP access network in this form. Here, the term "position-related information" is used to represent any type of information derived from received broadcast or satellite (e.g. GPS) signals that can be used for determining a geographical position of the radio receiver.

After the data stream has been transported basically through the IP access network, the added position-related information is extracted from the data stream and saved, for determining the geographic position of the calling terminal based on the position-related information. The following description is directed to the use of broadcast signals from base stations in a mobile network, although it should be noted that signals from navigation satellites could alternatively be used.

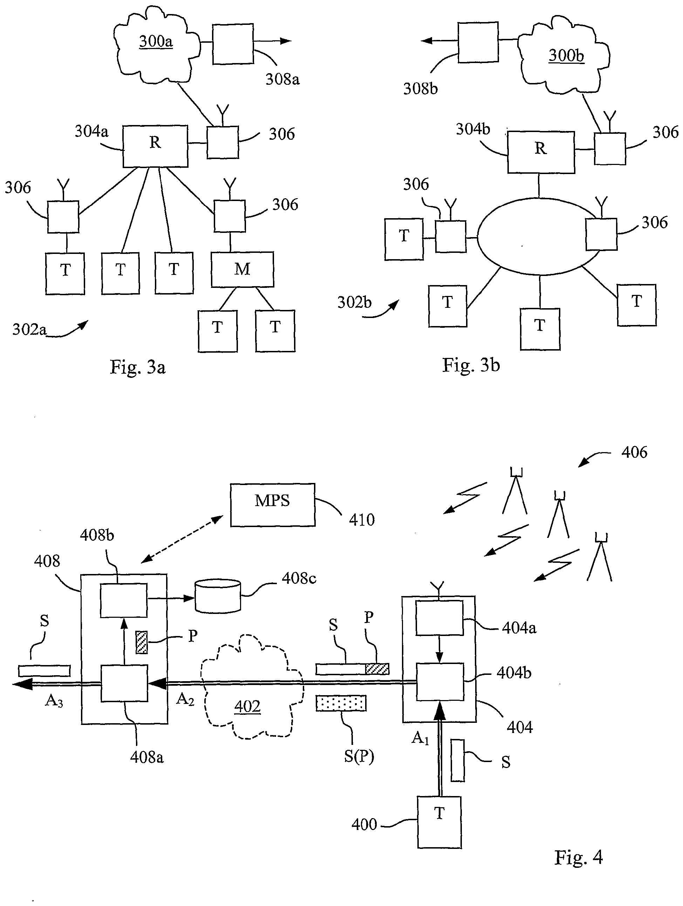

A first new component referred to as a Location Information Component LIC is now introduced, mainly containing a radio receiving part and a location information adding part. The LIC is arranged "locally" in the IP network in the vicinity of one or more end points for which it is desirable to determine the location, to receive and convey data streams from any terminals connected to the covered end point(s). Thus, a plurality of LIC units may be distributed at different suitable locations in the IP access network to cover plural end points over a certain area, which is schematically illustrated for two different network topologies in Fig. 3a and Fig. 3b, respectively.

Fig. 3a shows an IP access network 300a using a star-type network topology where a plurality of terminals (T) 302a, including modems (M), are connected to a central router (R) 304a by means of dedicated connection lines, as similar to network 202 in Fig. 2. Fig. 3b shows an IP access network 300b using a bus-type network structure where a plurality of terminals (T) 302b are connected to a router 304b by means of a common connection line, as similar to network 204 in Fig. 2. As shown, LIC units may be located at various positions in the network, as indicated by numeral 306 in both figures 3a, 3b, e.g. at a terminal, modem or router, to represent the position of any calling terminal from which the LIC receives data streams. In use, the LIC 306 receives downlink radio broadcast signals from one or more base stations in a mobile network and derives position-related information from the received signals.

Thus, it is possible to attach such an LIC 306 at any communication node or link through which data streams may run from plural end points, depending on the accuracy requirements and how the end points are spread out physically. An LIC may thus be attached directly at an end-user device to coincide with its position, but then only covering a single terminal and end point. To cover more than one terminal, an LIC may also be attached at a modem (that may have more than one terminal attached), a hub, a router, a switch, a repeater or a power adjusting component, as long as its position is reasonably close to the covered end points and any connected terminals. Generally speaking, the LIC is preferably attached at a point where it can represent the position of any terminal communicating through that point.

Broadcast signals from base stations are originally intended to be received by mobile stations e.g. for purposes of information, cell selection and handover. Regular mobile stations are also typically instructed to measure such broadcast signals according to a list of neighbouring base stations received from a serving base station, in order to support cell selection and handover by frequently sending reports with measurement results to the serving base station. Moreover, such signal measurements can also be used for calculating the position of the terminal with more or less accuracy, and a Mobile Positioning System (MPS) is often employed in mobile networks to that end.

The MPS may use various positioning functions to calculate the position of a terminal in the form of geographic coordinates or the like, e.g. based on signal strength and/or time alignment measurements on signals broadcasted from different base stations at known locations, sometimes referred to as "triangulation". Other positioning functions may use cell or location area identities contained in the broadcasted signals, to calculate the position with an accuracy naturally depending the cell size. Such available positioning functions are well-known to the skilled person and are not necessary to describe here further in order to understand the present invention.

The LIC 306 basically acts as an ordinary mobile terminal camping in idle mode, and initially locks on to the broadcast frequency of a serving base station in order to read a cell identity and/or receive the list of neighbouring base stations therefrom. The LIC 306 thus derives position-related information from the received broadcast signals that can be used for determining its position. For example, the LIC may make measurements on the received signal strength and/or the time alignment on broadcast transmissions from each base station according to the list, one at a time, just as any camping mobile station connected to the mobile network is obliged to do according to conventional routines. However, the LIC is not registered as a subscriber in the mobile network, nor is an SIM (Subscriber Identity Module) or similar used, and the LIC makes no uplink transmissions towards the mobile network.

The LIC neither sends measurement reports to the serving base station. Instead, the LIC 306 takes the measurement results and/or read cell identity/identities and adds it as "position-related information" to data streams coming from any terminals making a call when connected to the end point(s) covered by the LIC, before conveying the streams further through the IP access network.

Further, a second new component referred to as a Location Information Aggregator LIA is also introduced to receive data streams from end points in the access network. The LIA may be arranged at a more "central" position inside or outside the access network, e.g. in a network gateway or in some network service node such as an operation and maintenance (O&M) node. LIA units are indicated by numeral 308a and 308b in Fig. 3a and 3b, respectively. In use, the LIA 308a,b extracts any location related information that has been added to a data stream by an LIC 306, before the stream is further conveyed towards its destination in its original form, i.e. without the location related information.

Further, the LIA 308a,b associates the location of end points with their network addresses, e.g. an IP address or MAC (Medium Access Control) address used at the respective end point, depending on the protocol used. Such associations of locations and end points may be stored in a location database or the like in the IP access network.

In one embodiment, position-related information extracted from a received data stream is associated with the network address of the corresponding end point, which is saved by storage in a location database or the like (not shown) in the IP access network. In this case, the extracted position-related information is saved as implicit location information associated with the end point, meaning that the implicit location information can be used for calculating or deriving the actual location.

In an alternative embodiment, the LIA 308a,b retrieves a geographic position from an MPS in the mobile network, based on the extracted position-related information. The LIA 308a,b may then save the obtained geographic position as explicit location information associated with the end point address from which the data stream was sent. Thus, the explicit location information directly indicates the actual location, e.g. as coordinates or a street address or the like.

Different embodiments of this solution will now be described in more detail, initially with reference to Fig. 4 illustrating a communication terminal 400 connected to an IP access network 402 at a certain end point in the network having a certain network address. A Location Information Component LIC 404 is arranged to cover one or more such end points, including the one that terminal 400 is connected to.

The LIC 404 receives a schematically illustrated data stream S sent from terminal 400 when making a call, as illustrated by a first arrow A₁. The LIC 404 has been placed relatively locally in the vicinity of its covered end point(s), and its physical position has been selected to basically represent the position of any terminal connected to its covered end point(s), within a certain acceptable accuracy. For example, the LIC 404 may have been positioned at a distance not farther than 100 meters from each covered end point.

The LIC 404 basically contains a radio receiving part 404a and a location information adding part 404b. The radio receiving part 404a is adapted to receive broadcast signals transmitted from one or more base stations 406 of a mobile network, as described above. The mobile network may be any existing network using communication protocols according to, e.g., GSM, PCS, TDMA, CDMA, GPRS or WCDMA which are all well-known standards in this field.

In one embodiment, the radio receiving part 404a may tune in to different broadcast frequencies according to a list of neighbouring base stations and measure the received signal strength (RSS) and/or a time alignment for each received frequency. In another embodiment, radio receiving part 404a may read a cell or location area identity broadcasted from one or more base stations, which may be sufficient for determining the position with adequate accuracy.

Initially, the radio receiving part 404a locks on to the frequency of the broadcast transmission of one of the base stations 406 (thereby being the serving base station), preferably based on the best received signal. In this example, radio receiving part 404a receives the list of neighbouring base stations in a broadcasted measurement order originally intended for any mobile stations connected to that serving base station.

The radio receiving part 404a may then make measurements on broadcast signals received from each neighbouring base station 406 in the list and also from the serving base station, e.g. according to a measurement scheme typically used by any mobile station in the mobile network. However, it is not necessary to use a list of neighbouring base stations, and the radio receiving part 404a may make measurements on any received broadcast signals by scanning the available frequency band, although a neighbour list would make this process faster and more effective.

After measuring, the radio receiving part 404a transfers the most recent measurement results to the location information adding part 404b. This procedure may be repeated on a regular basis, e.g. once a day or once a week, depending on how frequently the configuration of the mobile network is expected to change. When receiving the data stream S from terminal 400, the location information adding part 404b adds the current measurement results as position-related information to the data stream S coming from the terminal 400. The position-related information is thus regarded as implicit location information in this context.

According to different alternatives as shown in the figure, the position-related information can be added simply as a separate bit section P attached to the original data stream S, according to some suitable protocol. Alternatively, the position-related information can be added by modulating the entire data stream S, or any selected part thereof, according to some suitable modulation scheme to make up a modulated data stream S(P). In this context, the skilled person will be capable to apply any suitable type of modulation scheme including Frequency Modulation (FM), Time Modulation (TM), Phase Modulation (PM), Coded Modulation (CDMA), etc., and the present invention is not limited in this respect. Such conventional modulation methods involving various algorithms and filter functions are well-known to the skilled person, and are not necessary to describe further in order to understand the present invention.

The data stream S+P (attached) or S(P) (modulated), thus modified to include the added position-related information, is then conveyed in this form further through the IP access network 402 over various routers, switches and links, as illustrated by a second arrow A₂. The modified data stream is eventually received at a Location Information Aggregator LIA 408 arranged at a relatively central position in the access network 402, e.g. in a network gateway or operation and maintenance (A&M) node (not shown). In use, the LIA 408 may thus be arranged to receive data streams from a plurality of end points and LIC units 404 distributed in the IP access network, as from terminal 400.

The LIA 408 basically contains an information extracting part 408a and a location information associating part 408b. The information extracting part 408a extracts the position-related information P from the received data stream S+P or S(P), before the stream S is further conveyed in its original form towards its destination. The location information associating part 408b then associates the extracted position-related information with the end point address of terminal 400 (which can be read from the data stream), and stores the association of location and end point in a location database 408c or the like. The end point may be defined, e.g., by an IP address or a MAC address used at the end point, depending on the network type. Alternatively, the location may be associated with an identity of the sending terminal or modem, if used.

As mentioned above, the LIA 408 may alternatively retrieve a geographic position from an MPS 410 in the mobile network, based on the extracted position-related information, as indicated by a dashed arrow. To that end, the location information associating part 408b may thus send a position query or the like to the MPS 410 with the extracted (implicit) position-related information as input. After receiving a geographic position from MPS 410 in reply, the location information associating part 408b may then save the obtained geographic position as explicit location information associated with the address in the location database 408c. It should be noted that the obtained geographic position may be in the form of geographic coordinates, a geographic area or a street address or the like, and the present invention is not limited in this respect.

Finally, the information extracting part 408a sends the data stream S in its original form, i.e. without the previously added location information, to its destination, as illustrated by a final third arrow A₃.

Further, the obtained geographic position may be used for routing the data stream to a suitable destination, particularly in the case of an emergency call that should be routed to an emergency centre reasonably close to the calling party. Moreover, the called emergency centre or other used service application can retrieve that geographic position from the location database 408c, if needed, by means of the address of the calling party received with the emergency call. Being a comprehensive explicit piece of information, the geographic position may also be transferred along with the data stream to the called party, if required.

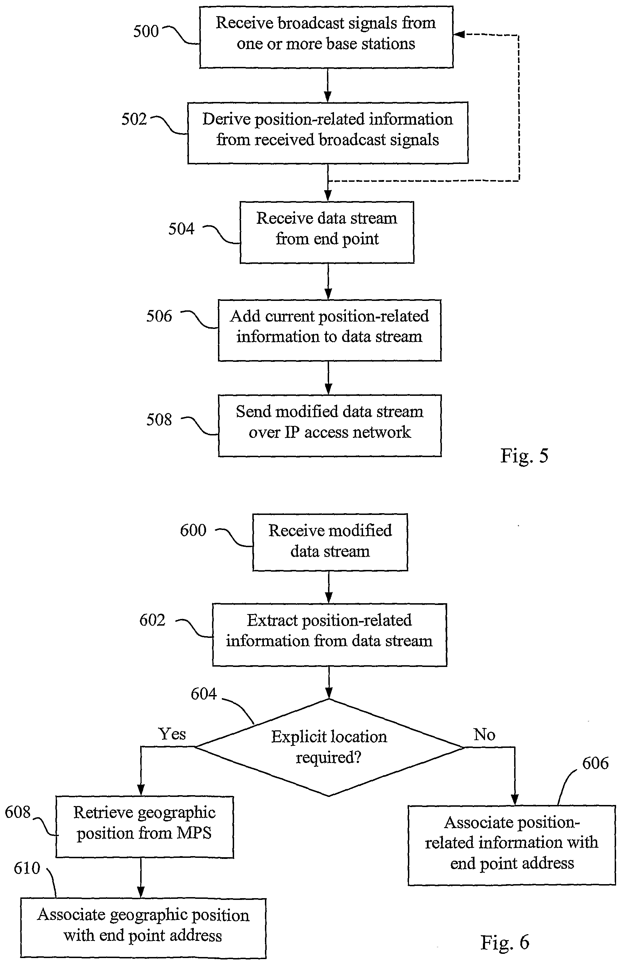

Fig. 5 is a flow chart illustrating a procedure for providing location information to a data stream in an IP access network, as basically executed in an LIC, according to one embodiment. In a first **step 500**, broadcast signals are received from one or more base stations of a mobile network, e.g. by means of the radio receiving part 404a in LIC 404 according to Fig. 4. As mentioned above, satellite signals may alternatively be received.

In a next **step 502**, position-related information is derived from the received broadcast or satellite signals, which can be done in different ways as described above. Thus, the position-related information may be derived by measuring received broadcast signals with respect to one or more physical parameters, such as RSS or time alignment, and/or by reading cell information contained in the signals such as a cell identity or location area identity, or by reading GPS parameters in the case of GPS signals. As indicated by the dashed arrow, steps 500 and 502 are preferably repeated on a regular basis to ensure that the latest derived position-related information is up to date, even if the mobile network is reconfigured from time to time, e.g. in cell planning operations or the like. Thereby, it is not necessary to obtain information explicitly from the network operator regarding any changes of network configurations.

In a next illustrated **step 504**, a data stream is received from an end point covered by the LIC, which is sent by a calling communication terminal currently connected to that end point. Then, the latest derived position-related information according to steps 500, 502 is added to the received data stream, in a **step 506**, either by attaching a separate bit section with the information to the data stream or by modulating the information onto the data stream, as described above. Thus, a separate bit section can be attached to the data stream, by using a proper protocol stack (e.g. according to IP) and software to compose that bit section. If modulation is applied, any suitable modulation technique may be used, e.g. PM, FM, TM, CDMA, etc., as mentioned above.

Finally, the modified data stream is sent over the IP access network in a last illustrated **step 508**. As mentioned above, steps 500 and 502 may be continually repeated on a regular basis, such that position-related information that is up to date can be added when a new data stream is received. In the case of satellite navigation signals, it would be sufficient to obtain the position-related information just once when the LIC is installed at a certain location, since this information will naturally not change at that location. In one implementation, the position-related information can be obtained according to steps 500 and 502 each time the LIC is powered on or otherwise activated, indicating that it may have been moved to a new location.

Fig. 6 is a flow chart illustrating a procedure for obtaining location information from a data stream in an IP access network according to another embodiment, as basically executed in an LIA in co-operation with an LIC having acted as described for Fig. 5 above. In a first **step 600**, a data stream is received that has been modified by the LIC to include the position-related information and was sent therefrom in step 508. In a next **step 602**, the position-related information is extracted from the data stream, either by removing an attached separate bit section with the information or by demodulating the data stream, depending on the technique used by the LIC in step 506 above.

Typically, if the position-related information comes from a mobile network, the extracted position-related information can be considered as implicit location information, and a suitable positioning method must be used, based on the implicit location information, to determine the location in a comprehensive explicit form, such as geographic coordinates or a street address or similar. As mentioned above, various positioning functions may be used for calculating the position, e.g. based on signal strength and/or time alignment measurements on signals from different base stations, or based on read cell or location area identities.

Depending on the implementation, an optional **step 604** may now follow of determining whether such explicit location information is needed or required, which may depend on service requirements and/or regulations, e.g. concerning emergency calls.

If explicit location information is not required, the position-related information in its form of implicit location information is associated with a network address of the end point from which the data stream was sent, in a **step 606.** If required, the geographic position is retrieved from an MPS in the mobile network in a **step 608**, based on the position-related information extracted in step 602. Thereafter, the retrieved geographic position, making up the explicit location information, is associated with a network address of the end point from which the data stream was sent, in a **step 610**. In step 606 or 610, the implicit or explicit location information may be associated with an identity of the calling terminal or of a modem if used, instead of with the end point address.

The association made in step 606 or 610 may involve storing the location information together with the end point address in a location database or the like, to be available for retrieval upon request from the called party such as an emergency centre or an application server providing the used service.

Explicit location information may also be supplied to the called party directly together with the data stream, or in a separate message. In that case, the location information can be provided by means of a so-called CLF (Connectivity Session Location and Repository Function), which is a standardised functionality for providing location information according to TISPAN (Telecom and Internet Services and Protocols for Advanced Networks).

Further, implicit location information may be exported to an entity inside or outside the IP access network which may use it to determine explicit location by performing a positioning operation.

In further embodiments, if the position is needed for routing the data stream to a suitable destination, as for emergency calls, the entire data stream including the position-related information may be routed from the LIA to an MSC (Mobile Switching Centre) in a mobile core network. The MSC may then perform the routing to a suitable destination based on the position-related information. This would of course require that a feasible communication link is established between the LIA and the MSC, by means of a media gateway or the like that can create suitable control signals and a payload stream towards the MSC.

The present invention, as described with reference to different embodiments above, offers a simple yet reliable mechanism for obtaining location information for terminals connected to a fixed IP access network, in order to make it available to the called party, e.g. an emergency centre, and/or an application server or the like. The features of a mobile network, or alternatively a satellite navigation system, can be freely utilised without affecting its operation or requiring radio network capacity by not transmitting any uplink signals or requiring any dedicated signalling. Further, it is a great advantage that no network configuration data is needed to implement the present invention, either regarding the IP access network or a mobile network if used. The inventive LIC units can also be moved between different locations and still provide relevant location information automatically.

While the invention has been described with reference to specific exemplary embodiments, the description is in general only intended to illustrate the inventive concept and should not be taken as limiting the scope of the invention. Further, the invention is not limited to any particular services but may be used for providing location information for any type of communication service requiring such information. The present invention is defined by the appended claims.

## Claims

1. A method of providing a location of a subscriber terminal (400) connected to an end point in a fixed internet protocol, IP, access network (402), the method comprising the following steps executed in a Location Information Component, LIC, (404) located in the IP access network (402) in the vicinity of said end point in order to represent a position of any terminal (400) connected to said end point:
- receiving (500) broadcast signals from a plurality of base stations (406) in a mobile network,
- deriving (502) latest position-related information from the broadcast signals received from the plurality of base stations (406) in the mobile network, wherein the latest position-related information is derived (502) from the broadcast signals received from the plurality of base stations (406) in a mobile network, by measuring the received broadcast signals with respect to a received signal strength,
- repeating the receiving (500) and the deriving (502) to periodically update the latest position-related information,
- receiving (504) a data stream from said subscriber terminal (400) sent through said end point,
- modifying (506) the received data stream by adding said derived latest position-related information to the data stream, and
- sending (508) the modified data stream over the IP access network (402).

2. The method according to claim 1, wherein the latest position-related information is added to the data stream by attaching a separate bit section containing the latest position-related information.

3. The method according to claim 1, wherein the latest position-related information is added to the data stream by modulating the latest position-related information upon at least a part of the data stream.

4. The method according to any of claims 1-3, wherein the latest position-related information is derived (502) from the broadcast signals received from the plurality of base stations (406) in the mobile network, by measuring the received broadcast signals with respect to a received signal time alignment and/or by reading cell information contained in the received broadcast signals such as a cell identity or location area identity.

5. The method according to any of claims 1-4, wherein the modified data stream is sent to a Location Information Aggregator, LIA, (408) which is then able to extract the latest position-related information from the modified data stream and store an association of a location and a network address of the end point or an identity of the sending terminal (400) or of a modem, if used.

6. An arrangement for providing a location of a subscriber terminal (400) connected to an end point in a fixed internet protocol, IP, access network (402), in a Location Information Component, LIC, (404) located in the IP access network (402) in the vicinity of said end point in order to represent a position of any terminal (400) connected to said end point, the arrangement comprising:
- means (404a) for receiving (500) broadcast signals from a plurality of base stations (406) in a mobile network,
- means (404a) for deriving (502) latest position-related information from the broadcast signals received from the plurality of base stations (406) in the mobile network, wherein said means (404a) is adapted to derive the latest position-related information from broadcast signals received from the plurality of base stations (406) in the mobile network, by measuring the received broadcast signals with respect to a received signal strength,
- means (404a) for repeating the receiving (500) and the deriving (502) to periodically update the latest position-related information,
- means for receiving a data stream from said subscriber terminal (400) sent through said end point,
- means (404b) for modifying the received data stream by adding said derived position-related information to the data stream, and
- means for sending the modified data stream over the IP access network (402).

7. The arrangement according to claim 6, wherein said deriving means (404a) is adapted to derive the latest position-related information from broadcast signals received from the plurality of base stations (406) in the mobile network, by measuring the received broadcast signals with respect to a received signal time alignment and/or by reading cell information contained in the received broadcast signals such as a cell identity or location area identity.

8. The arrangement according to any of claims 6-7, wherein said sending means is adapted to send the modified data stream to a Location Information Aggregator, LIA, (408) which is then able to extract the latest position-related information from the modified data stream and store an association of a location and a network address of the end point or an identity of the sending terminal (400) or of a modem, if used.

9. A method of providing a location of a subscriber terminal (400) connected to an end point in a fixed internet protocol, IP, access network (402), the method comprising the following steps executed in a system comprising a LIC, (404) Location Information Component, according to claim 6 and a Location Information Aggregator, LIA, (408) arranged centrally in the IP access network (402) to receive data streams sent through end points in the IP access network (402):
- receiving (600) a data stream originally sent from said subscriber terminal (400) through said end point, wherein the data stream has been modified to contain latest position-related information,
- extracting (602) the latest position-related information from the data stream, wherein the extracted latest position-related information is updated periodically by said LIC (404) based on broadcast signals received from the plurality of base stations (406) in a mobile network, and
- storing an association of location information, based on the extracted latest position-related information, and a network address of the end point or an identity of the sending terminal (400) or of a modem, if used.

10. The method according to claim 9, wherein a geographic position is retrieved (608) from a mobile positioning system based on the extracted latest position-related information, to constitute explicit location information in said storing step.

11. The method according to claim 9, wherein the extracted latest position-related information constitutes implicit location information in said storing step.

12. The method according to any of claims 9-11, wherein the latest position-related information is extracted (602) by taking an attached separate bit section containing the latest position-related information, from the data stream.

13. The method according to any of claims 9-11, wherein the latest position-related information is extracted (602) by de-modulating at least a part of the data stream.

14. A system comprising a first arrangement in a LIC, (404) Location Information Component, according to claim 6 and a second arrangement for providing a location of a subscriber terminal (400) connected to an end point in an internet protocol, IP, access network (402), in a Location Information Aggregator, LIA, (408) arranged centrally in the IP access network (402) to receive data streams sent through end points in the IP access network (402), the second arrangement comprising:
- means for receiving a data stream originally sent from said subscriber terminal (400), wherein the data stream has been modified to contain latest position-related information,
- means (408a) for extracting the latest position-related information from the data stream, wherein the extracted latest position-related information is updated periodically by said LIC (404) based on broadcast signals received from plurality of base stations (406) in a mobile network, and
- means (408c) for storing an association of location information, based on the extracted latest position-related information, and a network address of the end point or an identity of the sending terminal (400) or of a modem, if used.

15. A system according to claim 14, further comprising means for retrieving a geographic position from a mobile-positioning system based on the extracted latest position-related information, to constitute explicit location information in said storing means (408c).

## Patentansprüche

1. Verfahren zum Bereitstellen einer Position eines Teilnehmerendgeräts (400), das mit einem Endpunkt in einem fixierten Internetprotokoll(IP)-Zugangsnetzwerk (402) verbunden ist, wobei das Verfahren die folgenden Schritte, ausgeführt in einer Location Information Component (LIC) (404), umfasst, die sich in dem IP-Zugangsnetzwerk (402) in der Umgebung des Endpunkts befindet, um einen Ort eines beliebigen Endgeräts (400) darzustellen, das mit dem Endpunkt verbunden ist:
- Empfangen (500) von Sendesignalen von einer Vielzahl von Basisstationen (406) in einem mobilen Netzwerk.
- Ableiten (502) der neuesten ortsbezogenen Informationen von den Sendesignalen, die von der Vielzahl von Basisstationen (406) in dem mobilen Netzwerk empfangen werden, wobei die neuesten ortsbezogenen Informationen von den Sendesignalen, die von der Vielzahl von Basisstationen (406) in dem mobilen Netzwerk empfangen werden, durch Messen der empfangenen Sendesignale in Bezug auf eine empfangene Signalstärke abgeleitet (502) werden,
- Wiederholen des Empfangens (500) und des Ableitens (502) um periodisch die neuesten ortsbezogenen Informationen zu aktualisieren,
- Empfangen (504) eines Datenstroms von dem Teilnehmerendgerät (400), der durch den Endpunkt gesendet wird,
- Modifizieren (506) des empfangenen Datenstroms durch Hinzufügen der abgeleiteten neuesten ortsbezogenen Informationen zu dem Datenstrom, und
- Senden (508) des modifizierten Datenstroms über das IP-Zugangsnetzwerk (402).

2. Verfahren nach Anspruch 1, wobei die neuesten ortsbezogenen Informationen dem Datenstrom durch Anbringen eines separaten Bitabschnitts hinzugefügt werden, der die neuesten ortsbezogenen Informationen enthält.

3. Verfahren nach Anspruch 1, wobei die neuesten ortsbezogenen Informationen dem Datenstrom durch Modulieren der neuesten ortsbezogenen Informationen auf mindestens einen Teil des Datenstroms hinzugefügt werden.

4. Verfahren nach einem der Ansprüche 1-3, wobei die neuesten ortsbezogenen Informationen durch Messen der empfangenen Sendesignale in Bezug auf eine empfangene Signalzeitausrichtung und/oder durch Lesen von Zellinformationen, die in den empfangenen Sendesignalen enthalten sind, wie etwa eine Zellidentität oder eine Positionsbereichsidentität, von den Sendesignalen abgeleitet (502) werden, die von der Vielzahl von Basisstationen (406) in dem mobilen Netzwerk empfangen werden.

5. Verfahren nach einem der Ansprüche 1-4, wobei der modifizierte Datenstrom an einen Location Information Aggregator (LIA) (408) gesendet wird, der dann dazu in der Lage ist, die neuesten ortsbezogenen Informationen aus dem modifizierten Datenstrom zu extrahieren und eine Zuordnung einer Position und einer Netzwerkadresse des Endpunkts oder eine Identität des sendenden Endgeräts (400) oder eines Modems, falls verwendet, zu speichern.

6. Anordnung zum Bereitstellen einer Position eines Teilnehmerendgeräts (400), das mit einem Endpunkt in einem fixierten Internetprotokoll(IP)-Zugangsnetzwerk (402) verbunden ist, in einer Location Information Component (LIC) (404), die sich in dem IP-Zugangsnetzwerk (402) in der Umgebung des Endpunktes befindet, um einen Ort eines beliebigen Endgeräts (400), das mit dem Endpunkt verbunden ist, darzustellen, wobei die Anordnung Folgendes umfasst:
- Mittel (404a) zum Empfangen (500) von Sendesignalen von einer Vielzahl von Basisstationen (406) in einem mobilen Netzwerk,
- Mittel (404a) zum Ableiten (502) von neuesten ortsbezogenen Informationen von den Sendesignalen, die von der Vielzahl von Basisstationen (406) in dem mobilen Netzwerk empfangen werden, wobei die Mittel (404a) dazu angepasst sind, die neuesten ortsbezogenen Informationen von den Sendesignalen, die von der Vielzahl von Basisstationen (406) in dem mobilen Netzwerk empfangen werden, durch Messen der empfangenen Sendesignale in Bezug auf eine empfangenen Signalstärke abzuleiten,
- Mittel (404a) zum Wiederholen des Empfangens (500) und des Ableitens (502), um die neuesten ortsbezogenen Informationen periodisch zu aktualisieren,
- Mittel zum Empfangen eines Datenstroms von dem Teilnehmerendgerät (400), der durch den Endpunkt gesendet wurde,
- Mittel (404b) zum Modifizieren des empfangenen Datenstroms durch Hinzufügen der abgeleiteten ortsbezogenen Informationen zu dem Datenstrom, und
- Mittel zum Senden des modifizierten Datenstroms über das IP-Zugangsnetzwerk (402).

7. Vorrichtung nach Anspruch 6, wobei die Mittel zum Ableiten (404a) dazu angepasst sind, die neuesten ortsbezogenen Informationen von den Sendesignalen, die von der Vielzahl von Basisstationen (406) in dem mobilen Netzwerk empfangen werden, durch Messen der empfangenen Sendesignale in Bezug auf eine empfangene Signalzeitausrichtung und/oder durch Lesen von Zellinformationen, die in den empfangenen Sendesignalen enthalten sind, wie etwa eine Zellidentität oder eine Positionsbereichsidentität, abzuleiten.

8. Anordnung nach einem der Ansprüche 6-7, wobei die Mittel zum Senden dazu angepasst sind, den modifizierten Datenstrom an einen Location Information Aggregator (LIA) (408) zu senden, der dann dazu in der Lage ist, die neuesten ortsbezogenen Informationen aus dem modifizierten Datenstrom zu extrahieren und eine Zuordnung einer Position und einer Netzwerkadresse des Endpunkts oder eine Identität des sendenden Endgeräts (400) oder eines Modems, falls verwendet, zu speichern.

9. Verfahren zum Bereitstellen einer Position eines Teilnehmerendgeräts (400), das mit einem fixierten Internetprotokoll(IP)-Zugangsnetzwerk (402) verbunden ist, wobei das Verfahren die folgenden Schritte umfasst, die in einem System, das eine LIC (404) (Location Information Component) nach Anspruch 6 und einen Location Information Aggregator (LIA) (408) umfasst, der zentral in dem IP-Zugangsnetzwerk (402) angeordnet ist, um Datenströme zu empfangen, die durch die Endpunkte in dem IP-Zugangsnetzwerk (402) gesendet werden, ausgeführt werden:
- Empfangen (600) eines Datenstroms, der ursprünglich von dem Teilnehmerendgerät (400) durch den Endpunkt gesendet wird, wobei der Datenstrom modifiziert wurde, um neueste ortsbezogene Informationen zu enthalten,
- Extrahieren (602) der neuesten ortsbezogenen Informationen aus dem Datenstrom, wobei die extrahierten neuesten ortsbezogenen Informationen periodisch durch die LIC (404) basierend auf Sendesignalen, die von der Vielzahl von Basisstationen (406) in einem mobilen Netzwerk empfangen werden, aktualisiert werden, und
- Speichern einer Zuordnung von Positionsinformationen basierend auf den extrahierten neuesten ortsbezogenen Informationen und einer Netzwerkadresse des Endpunkts oder einer Identität des sendenden Endgeräts (400) oder, falls verwendet, eines Modems.

10. Verfahren nach Anspruch 9, wobei ein geografischer Ort aus einem mobilen Positionierungssystem basierend auf den extrahierten neuesten ortsbezogenen Informationen abgerufen (608) wird, um explizite Positionsinformationen in dem Speicherschritt darzustellen.

11. Verfahren nach Anspruch 9, wobei die extrahierten neuesten ortsbezogenen Informationen implizierte Positionsinformationen in dem Speicherschritt darstellen.

12. Verfahren nach einem der Ansprüche 9-11, wobei die neuesten ortsbezogenen Informationen durch Herausnehmen eines separaten Bitabschnitts von dem Datenstrom extrahiert (602) werden, der die neuesten ortsbezogenen Informationen enthält.

13. Verfahren nach einem der Ansprüche 9-11, wobei die neuesten ortsbezogenen Informationen durch Demodulieren mindestens eines Teils des Datenstroms extrahiert (602) werden.

14. System, das eine erste Anordnung in einer LIC (404) (Location Information Component) nach Anspruch 6 und eine zweite Anordnung zum Bereitstellen einer Position eines Teilnehmerendgeräts (400) umfasst, das mit einem Endpunkt in einem Internetprotokoll(IP)-Zugangsnetzwerk (402) in einem Location Information Aggregator (LIA) (408) verbunden ist, der zentral in dem IP-Zugangsnetzwerk (402) angeordnet ist, um Datenströme zu empfangen, die durch Endpunkte in dem IP-Zugangsnetzwerk (402) gesendet werden, wobei die zweite Anordnung Folgendes umfasst:
- Mittel zum Empfangen eines Datenstroms, der ursprünglich von dem Teilnehmerendgerät (400) gesendet wird, wobei der Datenstrom modifiziert wurde, um neueste ortsbezogene Informationen zu enthalten,
- Mittel (408a) zum Extrahieren der neuesten ortsbezogenen Informationen aus dem Datenstrom, wobei die extrahierten neuesten ortsbezogenen Informationen periodisch durch die LIC (404) basierend auf Sendesignalen, die von der Vielzahl von Basisstationen (406) in einem mobilen Netzwerk empfangen werden, aktualisiert werden, und
- Mittel (408c) zum Speichern einer Zuordnung von Positionsinformationen basierend auf den neuesten ortsbezogenen Informationen und einer Netzwerkadresse des Endpunkts oder einer Identität des sendenden Endgeräts (400) oder, falls verwendet, eines Modems.

15. System nach Anspruch 14, ferner Mittel zum Abrufen eines geografischen Orts aus einem mobilen Positionierungssystem basierend auf den extrahierten neuesten ortsbezogenen Informationen umfassend, um explizite Informationsinformationen in den Speichermitteln (408c) darzustellen.

## Revendications

1. Procédé de fourniture d'une localisation d'un terminal abonné (400) connecté à une extrémité dans un réseau d'accès de protocole Internet fixe, IP (402), le procédé comprenant les étapes suivantes exécutées dans un composant d'informations de localisation, LIC (404) situé dans le réseau d'accès IP (402) à proximité de ladite extrémité afin de représenter une position de tout terminal (400) connecté à ladite extrémité :
- la réception (500) de signaux de radiodiffusion en provenance d'une pluralité de stations de base (406) dans un réseau mobile,
- la dérivation (502) d'informations liées à la position la plus récente à partir des signaux de radiodiffusion reçus en provenance de la pluralité de stations de base (406) dans le réseau mobile, dans lequel les informations liées à la position la plus récente sont dérivées (502) des signaux de radiodiffusion reçus en provenance de la pluralité de stations de base (406) dans un réseau mobile, en mesurant les signaux de radiodiffusion reçus par rapport à une intensité de signal reçu,
- la répétition de la réception (500) et de la dérivation (502) pour mettre à jour périodiquement les informations liées à la position la plus récente,
- la réception (504) d'un flux de données en provenance dudit terminal abonné (400) envoyé par le biais de ladite extrémité,
- la modification (506) du flux de données reçu en ajoutant lesdites informations liées à la position la plus récente dérivées au flux de données, et
- l'envoi (508) du flux de données modifié sur le réseau d'accès IP (402).

2. Procédé selon la revendication 1, dans lequel les informations liées à la position la plus récente sont ajoutées au flux de données en joignant une section de bit séparée contenant les informations liées à la position la plus récente.

3. Procédé selon la revendication 1, dans lequel les informations liées à la position la plus récente sont ajoutées au flux de données en modulant les informations liées à la position la plus récente sur au moins une partie du flux de données.

4. Procédé selon l'une quelconque des revendications 1 à 3, dans lequel les informations liées à la position la plus récente sont dérivées (502) à partir des signaux de radiodiffusion reçus en provenance de la pluralité de stations de base (406) dans le réseau mobile, en mesurant les signaux de radiodiffusion reçus par rapport à un alignement temporel de signal reçu et/ou en lisant des informations de cellule contenues dans les signaux de radiodiffusion reçus telles qu'une identité de cellule ou une identité de zone de localisation.

5. Procédé selon l'une quelconque des revendications 1 à 4, dans lequel le flux de données modifié est envoyé à un agrégateur d'informations de localisation, LIA (408) qui est alors capable d'extraire les informations liées à la position la plus récente à partir du flux de données modifié et stocker une association d'une localisation et d'une adresse de réseau de l'extrémité ou une identité du terminal d'envoi (400) ou d'un modem, si ce dernier est utilisé.

6. Agencement pour fournir une localisation d'un terminal abonné (400) connecté à une extrémité dans un réseau d'accès de protocole Internet fixe, IP (402), dans un composant d'informations de localisation, LIC (404) situé dans le réseau d'accès IP (402) à proximité de ladite extrémité afin de représenter une position de tout terminal (400) connecté à ladite extrémité, l'agencement comprenant :
- un moyen (404a) pour recevoir (500) des signaux de radiodiffusion en provenance d'une pluralité de stations de base (406) dans un réseau mobile,
- un moyen (404a) pour dériver (502) des informations liées à la position la plus récente à partir des signaux de radiodiffusion reçus en provenance de la pluralité de stations de base (406) dans le réseau mobile, dans lequel ledit moyen (404a) est adapté pour dériver les informations liées à la position la plus récente à partir des signaux de radiodiffusion reçus en provenance de la pluralité de stations de base (406) dans le réseau mobile, en mesurant les signaux de radiodiffusion reçus par rapport à une intensité de signal reçu,
- un moyen (404a) pour répéter la réception (500) et la dérivation (502) pour mettre à jour périodiquement les informations liées à la position la plus récente,
- un moyen pour recevoir un flux de données en provenance dudit terminal abonné (400) envoyé par le biais de ladite extrémité,
- un moyen (404b) pour modifier le flux de données reçu en ajoutant lesdites informations liées à la position dérivées au flux de données, et
- un moyen pour envoyer le flux de données modifié sur le réseau d'accès IP (402).

7. Agencement selon la revendication 6, dans lequel ledit moyen de dérivation (404a) est adapté pour dériver les informations liées à la position la plus récente à partir de signaux de radiodiffusion reçus en provenance de la pluralité de stations de base (406) dans le réseau mobile, en mesurant les signaux de radiodiffusion reçus par rapport à un alignement temporel de signal reçu et/ou en lisant des informations de cellule contenues dans les signaux de radiodiffusion reçus telles qu'une identité de cellule ou une identité de zone de localisation.

8. Agencement selon l'une quelconque des revendications 6 et 7, dans lequel ledit moyen d'envoi est adapté pour envoyer le flux de données modifié à un agrégateur d'informations de localisation, LIA (408) qui est alors capable d'extraire les informations liées à la position la plus récente à partir du flux de données modifié et stocker une association d'une localisation et d'une adresse de réseau de l'extrémité ou une identité du terminal d'envoi (400) ou d'un modem, si ce dernier est utilisé.

9. Procédé de fourniture d'une localisation d'un terminal abonné (400) connecté à une extrémité dans un réseau d'accès de protocole Internet fixe, IP (402), le procédé comprenant les étapes suivantes exécutées dans un système comprenant un LIC, composant d'informations de localisation (404), selon la revendication 6 et un agrégateur d'informations de localisation, LIA (408) agencé au centre dans le réseau d'accès IP (402) pour recevoir des flux de données envoyés par le biais d'extrémités dans le réseau d'accès IP (402) :
- la réception (600) d'un flux de données envoyé à l'origine à partir dudit terminal abonné (400) par le biais de ladite extrémité, dans lequel le flux de données a été modifié pour contenir des informations liées à la position la plus récente,
- l'extraction (602) des informations liées à la position la plus récente à partir du flux de données, dans lequel les informations liées à la position la plus récente extraites sont mises à jour périodiquement par ledit LIC (404) d'après des signaux de radiodiffusion reçus en provenance de la pluralité de stations de base (406) dans un réseau mobile, et
- le stockage d'une association d'informations de localisation, d'après les informations liées à la position la plus récente extraites, et d'une adresse de réseau de l'extrémité ou une identité du terminal d'envoi (400) ou d'un modem, si ce dernier est utilisé.

10. Procédé selon la revendication 9, dans lequel une position géographique est récupérée (608) à partir d'un système de positionnement mobile d'après les informations liées à la position la plus récente extraites, pour constituer des informations de localisation explicites à ladite étape de stockage.

11. Procédé selon la revendication 9, dans lequel les informations liées à la position la plus récente extraites constituent des informations de localisation implicites à ladite étape de stockage.

12. Procédé selon l'une quelconque des revendications 9 à 11, dans lequel les informations liées à la position la plus récente sont extraites (602) en prenant une section de bit séparée jointe contenant les informations liées à la position la plus récente, à partir du flux de données.

13. Procédé selon l'une quelconque des revendications 9 à 11, dans lequel les informations liées à la position la plus récente sont extraites (602) en démodulant au moins une partie du flux de données.

14. Système comprenant un premier agencement dans un LIC, composant d'informations de localisation (404), selon la revendication 6 et un second agencement pour fournir une localisation d'un terminal abonné (400) connecté à une extrémité dans un réseau d'accès de protocole Internet, IP (402), dans un agrégateur d'informations de localisation, LIA (408) agencé au centre dans le réseau d'accès IP (402) pour recevoir des flux de données envoyés par le biais d'extrémités dans le réseau d'accès IP (402), le second agencement comprenant :
- un moyen pour recevoir un flux de données envoyé à l'origine à partir dudit terminal abonné (400), dans lequel le flux de données a été modifié pour contenir des informations liées à la position la plus récente,
- un moyen (408a) pour extraire les informations liées à la position la plus récente à partir du flux de données, dans lequel les informations liées à la position la plus récente extraites sont mises à jour périodiquement par ledit LIC (404) d'après des signaux de radiodiffusion reçus en provenance d'une pluralité de stations de base (406) dans un réseau mobile, et
- un moyen (408c) pour stocker une association d'informations de localisation, d'après les informations liées à la position la plus récente extraites, et d'une adresse de réseau de l'extrémité ou une identité du terminal d'envoi (400) ou d'un modem, si ce dernier est utilisé.

15. Système selon la revendication 14, comprenant en outre un moyen pour récupérer une position géographique à partir d'un système de positionnement mobile d'après les informations liées à la position la plus récente extraites, pour constituer des informations de localisation explicites dans ledit moyen de stockage (408c).
